# EUROPEAN PATENT APPLICATION

(11) **EP 4 173 774 A1**
(43) Date of publication of application: **03.05.2023**
(21) Application number: 22203678.2
(22) Date of filing: 25.10.2022
(51) Int. Cl.: B25J 11/00, B05B 13/04, B25J 9/04

(54) **PAINTING ROBOT AND PAINTING SYSTEM**

(30) Priority: 28.10.2021 JP 2021176417
(71) Applicant: Kabushiki Kaisha Yaskawa Denki, Kitakyushu-shi, Fukuoka 806-0004 (JP)
(72) Inventor: KONNO, Tsuyoshi, Kitakyushu-shi, 8060004 (JP); ITO, Tsuyoshi, Kitakyushu-shi, 8060004 (JP); MIYAZONO, Yoshiaki, Kitakyushu-shi, 8060004 (JP)
(74) Representative: BRP Renaud & Partner mbB Rechtsanwälte Patentanwälte Steuerberater

(57) **Abstract**

[Problem] To provide a painting robot (10) for improving accessibility to a workpiece (500).

[Solving method] A painting robot (10) includes a base (10b), a swivel base (11), a lower arm (12), an upper arm (UA), and a wrist unit (WU). The base (10b) is fixed to an installation surface (IS). The swivel base (11) is supported, on a base end side, on an upper surface side of the base (10b) and swivels about a first axis (A1) along a vertical direction. The lower arm (12) is supported, on a base end side, by the swivel base (11) and pivots about a second axis (A2) perpendicular to the first axis (A1). The upper arm (UA) is supported, on a base end side, by a tip end side of the lower arm (12) and pivots about a third axis (A3) parallel to the second axis (A4). The wrist unit (WU) has a three-axis configuration in which a base end side is supported by a tip end side of the upper arm (UA) and a tip end side is configured to receive attachment of an end effector (EE). The upper arm (UA) includes a first upper arm (13) on a base end side and a second upper arm (14) on a tip end side. The second upper arm (14) pivots about a fourth axis (A4) parallel to the third axis (A3), and an arm length is longer than an arm length of the first upper arm (13), and is shorter than twice the arm length of the first upper arm (13).

## Description

### Technical Field

Embodiments of the disclosure relate to a painting robot and a painting system.

### Background Art

Known robots operate by driving a plurality of joint portions individually of each other. An end effector suitable for applications such as welding and gripping is attached to the distal end of such a robot to perform various operations such as machining and moving a workpiece.

Further, a painting system has been proposed in which a painting robot equipped with an end effector for painting is placed inside a paint booth to paint an outer panel of an automobile body corresponding to a workpiece (for example, see Patent Document 1).

### Citation List

### Patent Literature

Patent Document 1: JP 2013-006235 A

### Summary of Invention

### Technical Problem

However, when painting an inner panel rather than an outer panel of the body, interference between the robot and the workpiece can be particularly problematic. In addition, when distance is ensured between the workpiece and the robot to prevent interference, the paint booth usually needs to be made larger.

An aspect of an embodiment provides a painting robot and a painting system with improved accessibility to a workpiece by extending an effective range of motion.

### Solution to Problem

A painting robot according to an aspect of an embodiment includes a base, a swivel base, a lower arm, an upper arm, and a wrist unit. The base is fixed to an installation surface. The swivel base is supported, on a base end side, on an upper surface side of the base and swivels about a first axis along a vertical direction. The lower arm is supported, on a base end side, by the swivel base and pivots about a second axis perpendicular to the first axis. The upper arm is supported, on a base end side, by a tip end side of the lower arm and pivots about a third axis parallel to the second axis. The wrist unit has a three-axis configuration in which a base end side is supported by a tip end side of the upper arm and a tip end side is configured to receive attachment of an end effector. The upper arm includes a first upper arm on a base end side and a second upper arm on a tip end side. The second upper arm is supported, on a base end side, by a tip end side of the first upper arm, pivots about a fourth axis parallel to the third axis, and has an arm length longer than an arm length of the first upper arm and shorter than twice the arm length of the first upper arm.

A painting system according to the aspect of the embodiment includes a paint booth and the painting robot. At least a pair of the painting robots is arranged in the paint booth so as to sandwich the workpiece in a transport direction of the workpiece. In the pair of painting robots, axis configurations are symmetrical with respect to a transport center plane along the transport direction, and distances between the first axis and the transport center plane are equal to each other.

### Advantageous Effects of Invention

The aspect of the embodiment can provide a painting robot and a painting system with improved accessibility to a workpiece.

### Brief Description of Drawings

FIG. 1 is a side view of a painting robot according to an embodiment.
FIG. 2A is a diagram illustrating an example of floor-mounted installation.
FIG. 2B is a diagram illustrating an example of wall-mounted installation.
FIG. 3A is a rear view illustrating an installation position of a support section.
FIG. 3B is a side view of the support section.
FIG. 4 is a schematic top view of a painting system according to the embodiment.
FIG. 5 is a schematic side view of the painting system according to the embodiment.
FIG. 6A is a model diagram illustrating an axis configuration of a two-roll hollow wrist.
FIG. 6B is a model diagram illustrating an axis configuration of a lemma wrist.
FIG. 6C is a model diagram illustrating an axis configuration of an inline wrist.
FIG. 6D is a model diagram illustrating an axis configuration of a three-roll hollow wrist.
FIG. 7 is a block diagram illustrating a configuration of the painting system.
FIG. 8 is a flowchart showing an operation procedure of the painting robot.

### Description of Embodiments

Embodiments of a painting robot and a painting system disclosed in the present application will be described in detail below with reference to the accompanying drawings. Note that this invention is not limited to the embodiments described below. Further, while a case in which a vehicle such as an automobile is an object to be painted is described in the following, the object to be painted is not limited to a vehicle. In the following, the object to be painted is described as a "workpiece".

Further, in the embodiments described below, expressions such as "perpendicular", "orthogonal", "vertical", "same", "symmetrical" and the like are used, but these states need not be satisfied in a strict sense. That is, each of the expressions described above allows for deviations in manufacturing accuracy, installation accuracy, processing accuracy, detection accuracy, and the like.

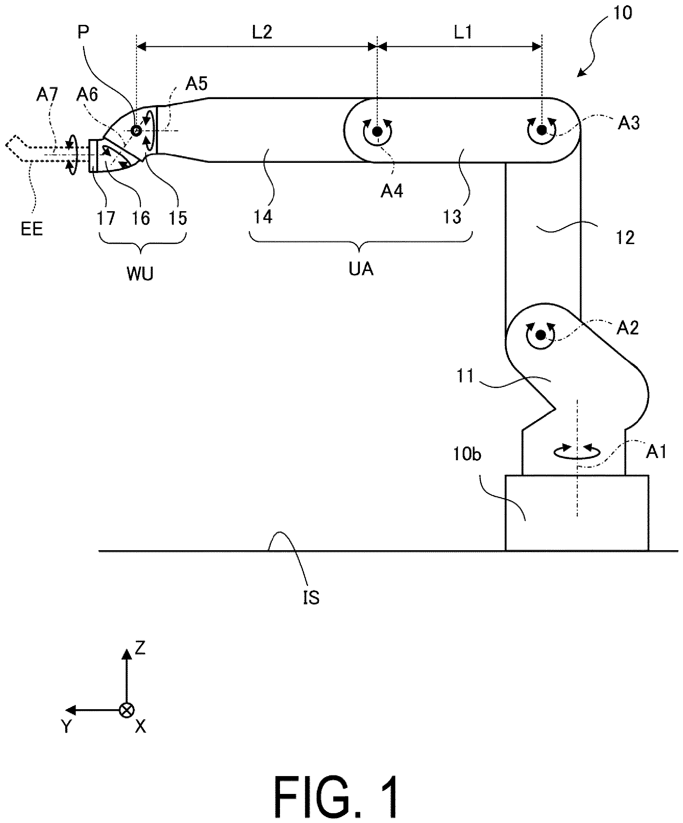

First, a painting robot 10 according to the embodiment will be described with reference to FIG. 1. FIG. 1 is a side view of the painting robot 10 according to the embodiment. In FIG. 1, for clarity of explanation, a three-dimensional orthogonal coordinate system is used, consisting of a Z-axis with a vertical upward direction as the positive direction, an X-axis with a workpiece transport direction (described below) as the positive direction, and a Y-axis orthogonal to the X-axis and the Z-axis. Such an orthogonal coordinate system may also be illustrated in other drawings used in the following description. Note that "orthogonal" means "perpendicular" to each other and "intersecting" each other.

As illustrated in FIG. 1, the painting robot 10 includes a base 10b, a swivel base 11, a lower arm 12, an upper arm UA, and a wrist unit WU. The base 10b is fixed to an installation surface IS. The swivel base 11 is supported, on a base end side, on an upper surface side of the base 10b, and swivels about a first axis A1 along the vertical direction (Z-axis).

Here, "pivot" refers to a motion of changing an angle formed by adjacent arms. "Rotation" refers to a motion of rotating adjacent arms relative to each other without changing the angle formed by the adjacent arms. Note that "pivot" may also refer to a motion of the arm swinging about a rotation axis, and "rotation" may also refer to a motion of the arm turning about the rotation axis along an extension direction of the arm.

The lower arm 12 is supported, on a base end side, by the swivel base 11, and pivots about a second axis A2 perpendicular to the first axis A1. The upper arm UA is supported, on a base end side, by a tip end side of the lower arm 12, and pivots about a third axis A3 parallel to the second axis A2.

The wrist unit WU has a three-axis configuration mechanism in which a base end side is supported by a tip end side of the upper arm UA and a tip end side is configured to receive attachment of an end effector EE. Specifically, the wrist unit WU includes a fifth arm 15, a sixth arm 16, and a seventh arm 17. The fifth arm 15 is supported, on a base end side, by the tip end side of the upper arm UA, and rotates about a fifth axis A5 orthogonal to a fourth axis A4. The sixth arm 16 is supported, on a base end side, by a tip end side of the fifth arm 15, and rotates about a sixth axis A6 intersecting the fifth axis A5.

Here, a tilt angle between the fifth axis A5 and the sixth axis A6 can be any angle of 0 degree or greater and 90 degrees or less on an acute angle side. The seventh arm 17 is supported, on a base end side, by a tip end side of the sixth arm 16, and rotates about the seventh axis A7 intersecting the sixth axis A6. The end effector EE (see the dashed line in FIG. 1) used for painting can be attached to a tip end side of the seventh arm 17. Note that the wrist unit WU illustrated in FIG. 1 is a so-called "two-roll hollow wrist" for painting. Thus, by providing the wrist unit WU with a hollow portion, hoses, tubes, cables, and the like can be routed in the hollow portion. Therefore, painting work can be easily performed on complex shaped workpieces without concern for interference by hoses, tubes, cables, or the like.

Here, the upper arm UA includes a first upper arm 13 on the base end side and a second upper arm 14 on the tip end side. The first upper arm 13 is supported, on a base end side, by the tip end side of the lower arm 12 and pivots about the third axis A3 described above. The second upper arm 14 is supported, on a base end side, by a tip end side of the first upper arm 13, and pivots about the fourth axis A4 parallel to the third axis A3. In other words, the upper arm UA has a two-arm configuration including the fourth axis A4 corresponding to a so-called "redundant axis", and the arm can be bent and extended by a pivoting motion about the fourth axis A4.

In the present embodiment, a distance between the third axis A3 and the fourth axis A4 is defined as an arm length of the first upper arm 13, and a distance between a P-point P, which is an intersection between the fifth axis A5 and the sixth axis A6, and the fourth axis A4 is defined as an arm length of the second upper arm 14. Here, the arm length of the second upper arm 14 is longer than the arm length of the first upper arm 13 and shorter than twice the arm length of the first upper arm 13.

That is, when the arm length of the first upper arm 13 is "L1" and the arm length of the second upper arm 14 is "L2", a relationship of "L1 < L2 < L1 × 2" is satisfied. With this relationship, the painting robot 10 can be prevented from interfering with the workpiece and the painting robot 10 can easily access the workpiece. It is further preferable to set the relationship to approximately "L2 = 1.2 × L1" from the perspective of preventing interference and improving accessibility.

When the upper arm UA has the redundant axis as described above, the upper arm UA can be bent and extended, so that the installation position of the painting robot 10 can be made closer to the workpiece while avoiding interference with the workpiece. Further, by making the second upper arm 14 longer than the first upper arm 13, an "effective range of motion", which is a range of motion that avoids interference with the workpiece, can be extended. As a result, accessibility of the painting robot 10 to the workpiece can be improved.

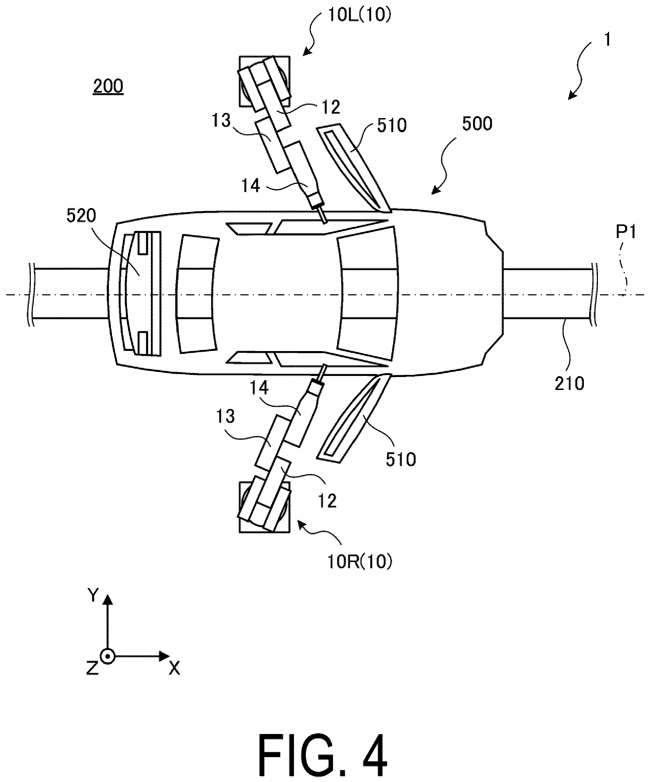

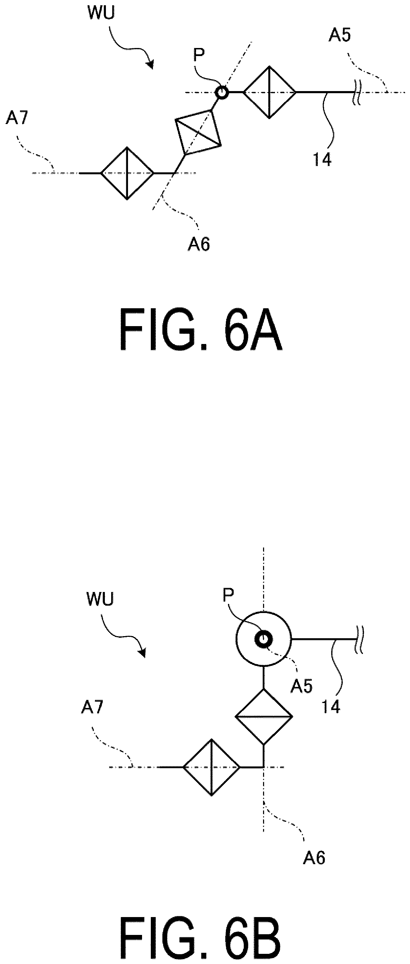

Note that the axis configuration of the painting robot 10 illustrated in FIG. 1 can be applied to a mirror configuration with respect to a symmetry plane parallel to the vertical axis (Z-axis), and this point will be described later with reference to FIG. 4 and others. Further, the wrist unit WU illustrated in FIG. 1 may have a different axis configuration, and this point will be described later with reference to FIGS. 6A to 6D.

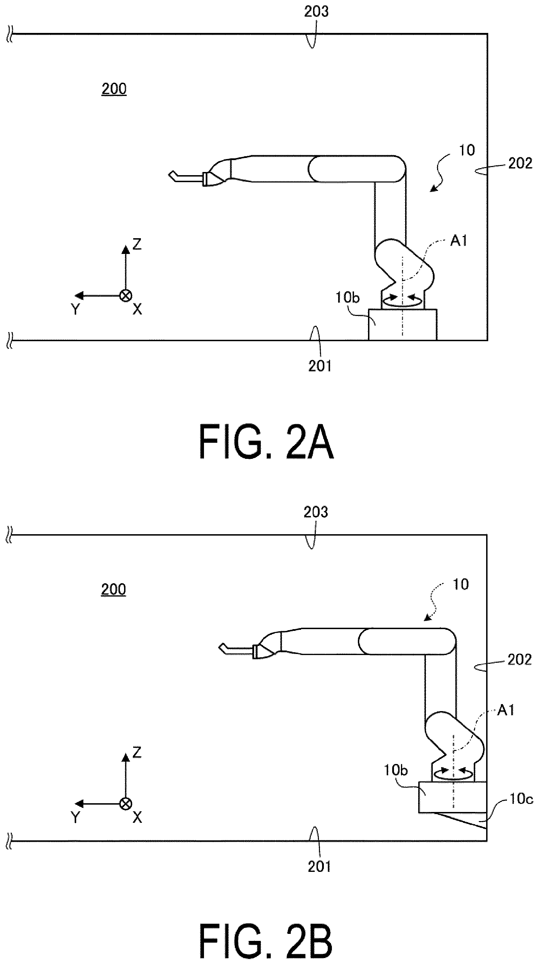

Next, an example of installation of the painting robot 10 illustrated in FIG. 1 in a paint booth 200 will be described with reference to FIGS. 2A and 2B. FIG. 2A is a diagram illustrating an example of floor-mounted installation, and FIG. 2B is a diagram illustrating an example of wall-mounted installation. As illustrated in FIGS. 2A and 2B, the paint booth 200 is a semi-closed space surrounded by a floor 201, a pair of walls 202 (one of which is not illustrated), and a ceiling 203, and can be opened to an upstream side (X-axis negative direction side) and a downstream side (X-axis positive direction side) in a workpiece transport direction.

Note that both FIG. 2A and 2B illustrate a case where the painting robot 10 is installed near the wall 202 on the right side (Y-axis negative direction side) in the paint booth 200 in the workpiece transport direction (X-axis positive direction). Further, the directional views in FIGS. 2A and 2B are the same as the directional view in FIG. 1.

When the painting robot 10 is floor-mounted as illustrated in FIG. 2A, a bottom surface of the base 10b is fixed to the floor 201 in the paint booth 200. Here, the first axis A1 of the painting robot 10 is parallel to the vertical axis (Z-axis). Note that while FIG. 2A illustrates a case in which the base 10b is directly fixed to the floor 201, the base 10b may be fixed on a stand fixed to the floor 201.

As illustrated in FIG. 2B, when the painting robot 10 is wall-mounted, the painting robot 10 is wall-mounted on the wall 202 in the paint booth 200 using an auxiliary member 10c provided on the lower surface side of the base 10b. Here, the first axis A1 of the painting robot 10 is parallel to the vertical axis (Z axis), as in the case illustrated in FIG. 2A. Note that while FIG. 2B illustrates a case in which the base 10b is installed so that a side surface of the base 10b is in contact with the wall 202, the side of the base 10b may be installed away from the wall 202. Further, the auxiliary member 10c may be omitted and the side surface of the base 10b may be fixed to the wall 202.

Note that while FIGS. 2A and 2B illustrate a case in which the painting robot 10 is disposed so that the first axis A1 of the painting robot 10 is parallel to the vertical axis (Z-axis), the painting robot 10 may be disposed in an orientation in which the first axis A1 is inclined relative to the vertical axis (Z-axis). For example, the painting robot 10 may be disposed such that the first axis A1 is parallel to a YZ plane illustrated in FIGS. 2A and 2B, and is in a range of 45 degrees to 90 degrees relative to the Y-axis. Here, 90 degrees corresponds to the orientation illustrated in FIGS. 2A and 2B. When the painting robot 10 is disposed inclined in this manner, the floor 201 or the wall 202 may be inclined, or the base 10b or the auxiliary member 10c may be inclined.

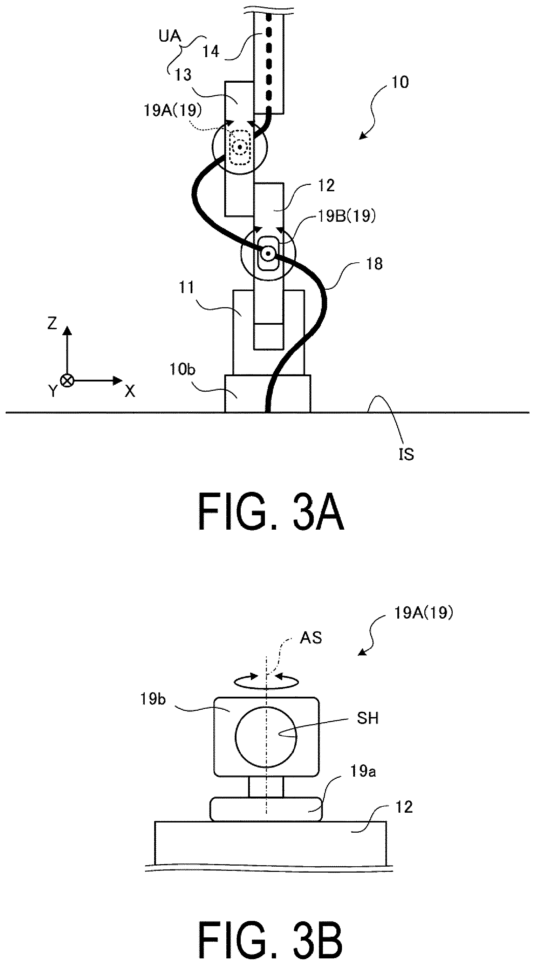

Next, a support section 19 that supports a linear body 18 routed on the painting robot 10 toward the end effector EE illustrated in FIG. 1 will be described with reference to FIGS. 3A and 3B. FIG. 3A is a side view illustrating an installation position of the support section 19, and FIG. 3B is a side view of the support section 19. FIG. 3A corresponds to a rear view of the painting robot 10 viewed from the wall 202 illustrated in FIG. 2A, and FIG. 3B corresponds to a side view of the support section 19 viewed from a direction perpendicular to a swing axis AS in the support section 19. Note that the orientation of the painting robot 10 illustrated in FIG. 3A is different from the orientation illustrated in FIG. 1.

Here, the linear body 18 includes hoses and tubes for supplying paint and gas, and cables for transmitting electrical signals to the end effector EE. Note that the plurality of hoses, tubes, and cables may be bundled together with a tie or the like, or may be disposed together in a large tube.

FIG. 3A illustrates the painting robot 10 with the lower arm 12, the first upper arm 13, and the second upper arm 14 illustrated in FIG. 1 extending vertically upward. That is, the extension direction of the lower arm 12, the first upper arm 13, and the second upper arm 14 is parallel to the Z-axis.

Here, in the orientation illustrated in FIG. 3A, the "front" of each arm is a surface on the Y-axis positive direction side, and the "rear" of each arm is a surface on the Y-axis negative direction side. In other words, in the orientation illustrated in FIG. 3A, a surface on a side far from the first axis A1 (see FIG. 1) is the "front" of each arm, and a surface on a side near the first axis A1 is the "rear" of each arm. Note that in FIG. 3A, illustration beyond the tip end side of the second upper arm 14 is omitted.

As illustrated in FIG. 3A, in the painting robot 10, the second upper arm 14 is supported by the first upper arm 13 on a side on which the first upper arm 13 is supported by the lower arm 12. That is, the second upper arm 14 and the lower arm 12 are connected to the same side of the first upper arm 13, respectively.

The linear body 18 is led out from the installation surface IS and routed outside the painting robot 10, and is introduced from the outside of the second upper arm 14 into the hollow portion of the wrist unit WU (see FIG. 1). Then, one end of the linear body 18 is connected to the end effector EE (see FIG. 1). Note that another end of the linear body 18 is connected to a paint tank or the like arranged outside the paint booth 200 illustrated in FIG. 2A and others. A portion where the linear body 18 passes through the paint booth 200 may be any one of outer walls (including a floor wall and a ceiling wall) surrounding the periphery of the paint booth 200.

As illustrated in FIG. 3A, the linear body 18 curves from the side of the lower arm 12 opposite to the first upper arm 13, across the rear side of the lower arm 12, and is guided across the front side of the first upper arm 13 to the front side of the second upper arm 14. That is, a routing path of the linear body 18 is S-shaped in the directional view in FIG. 3A.

Here, in the painting robot 10, the support sections 19 are provided on the first upper arm 13 and the lower arm 12, respectively. Note that when distinguishing between the two support sections 19, the support section 19 of the first upper arm 13 is described as a support section 19A and the support section 19 of the lower arm 12 is described as a support section 19B.

The support section 19 can swivel while supporting the linear body 18. Specifically, the support section 19 has a mechanism that swivels about a normal direction of the arm surface to which the support section 19 is attached. Further, when the linear body 18 is pushed or pulled due to a change in orientation of the painting robot 10, the support section 19 swivels in accordance with the change in orientation of the linear body 18. This allows the support section 19 to relieve stress applied to the linear body 18.

The support section 19A provided on the first upper arm 13 supports the linear body 18 routed across the front side of the first upper arm 13 toward the front side of the second upper arm 14, on the front side of the first upper arm 13. By providing the support section 19A that swivels while supporting the linear body 18 on the first upper arm 13 as described above, the linear body 18 can be smoothly guided even when the distance from the base end to the tip end of the upper arm UA changes due to the bending and extending motion of the upper arm UA.

The support section 19B provided on the lower arm 12 supports the linear body 18 routed across the rear side of the lower arm 12 toward the front side of the first upper arm 13, on the rear side of the lower arm 12. By providing the support section 19B that swivels while supporting the linear body 18 on the lower arm 12 as described above, the linear body 18 can be smoothly guided even when the relative orientation between the first upper arm 13 and the lower arm 12 changes.

Here, FIG. 3A illustrates a case in which the support section 19A and the support section 19B are provided at central portions of the first upper arm 13 and the lower arm 12 in the extension direction, respectively. However, the positions of the support sections are not limited to these, and each of the support sections 19 may be provided at a position shifted toward the base end side or the tip end side of each arm. Note that the support section 19A or the support section 19B may be omitted.

As illustrated in FIG. 3B, the support section 19 includes an attachment portion 19a and a holder portion 19b. The attachment portion 19a is attached to the surface of the painting robot 10 and supports the holder portion 19b. The holder portion 19b can swivel about the swing axis AS relative to the attachment portion 19a. Further, the holder portion 19b has a through-hole SH through which the linear body 18 is passed in a direction perpendicular to the swing axis AS, that is, in a direction along the surface of the painting robot 10.

Note that the holder portion 19b may be split so that each of the split portions has a semicircular through-hole SH. This configuration further facilitates routing of the linear body 18. The holder portion 19b may hold the linear body 18 so that the linear body 18 does not shift in the extension direction, or may hold the linear body 18 so as to allow the linear body 18 to shift in the extension direction.

Note that while FIG. 3B illustrates a case in which the support section 19 is attached to the rear surface of the lower arm 12, the support section 19 can be attached to the first upper arm 13 in a similar orientation. In a configuration where the support section 19 is attached to the first upper arm 13, the support section 19 is attached to the front surface of the first upper arm 13.

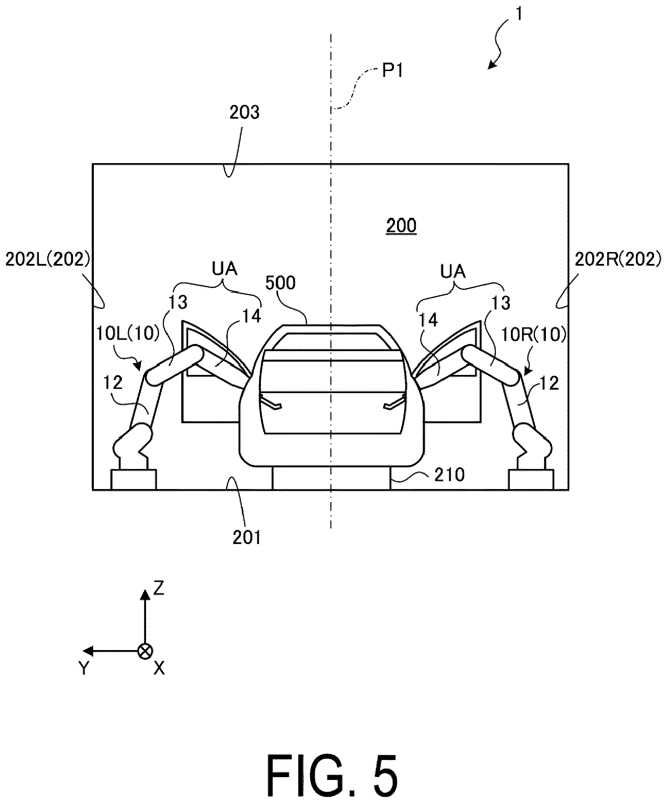

Next, a painting system 1 including the painting robot 10 illustrated in FIG. 1 and others will be described with reference to FIGS. 4 and 5. FIG. 4 is a schematic top view of the painting system 1 according to the embodiment, and FIG. 5 is a schematic side view of the painting system 1 according to the embodiment. Note that FIGS. 4 and 5 illustrate a case in which a workpiece 500 is a vehicle. Although one pair of painting robots 10 is illustrated in FIGS. 4 and 5, two or more pairs of painting robots 10 may be included in the painting system 1.

Further, in the following, a transport direction (X-axis positive direction) of a transport device 210 provided in the paint booth 200 is referred to as a "downstream side", a reverse direction of the transport direction is referred to as an "upstream side", a right side toward the transport direction is referred to as a "right side", and a left side toward the transport direction is referred to as a "left side". Further, in a top view, a plane passing through the center of the transport device 210 in the transport direction is referred to as a transport center plane PI.

Note that for the plurality of painting robots 10 installed in the paint booth 200, letters are added to the end of each reference numbers for identification. For example, "R" is added to the painting robot 10 installed on the right side of the transport device 210, and "L" is added to the painting robot 10 installed on the left side.

Here, the workpiece 500 is, for example, symmetrical with respect to the transport center plane P1. However, the workpiece 500 need not be strictly symmetrical. The shape of the workpiece 500 need only be such that a painting robot 10L on the left side and a painting robot 10R on the right side of the workpiece 500 can perform the same operation. Note that the painting robot 10L performs painting work on the left side of the workpiece 500 and the painting robot 10R performs painting work on the right side of the workpiece 500.

As illustrated in FIG. 4, the workpiece 500 is symmetrical with respect to the transport center plane PI, so that the painting robots facing each other across the transport device 210 perform painting work on the workpiece 500 while performing motions symmetrical to each other.

Hereinafter, individual devices installed in the paint booth 200 will be described. The transport device 210 and the painting robots 10 are installed in the paint booth 200. Here, the paint booth 200 is a room for painting and has a space isolated from the outside, as described above.

The transport device 210, such as a conveyor belt, is installed on the floor 201 (see FIG. 2A) in the paint booth 200. The transport device 210 transports the workpiece 500 at a predetermined speed in a predetermined transport direction (X-axis positive direction in FIG. 4). Note that the workpiece 500 is transported while fixed to a movable portion of the transport device 210 by a jig (not illustrated) or the like.

Note that the painting robot 10 is a robot that paints the workpiece 500. The configuration of the painting robot 10 has already been described with reference to FIG. 1 and others, so further description will be omitted here. Note that the painting robot 10 can increase the internal pressure by introducing a gas such as a nonflammable gas, thereby suppressing the inflow of gas from the outside.

The painting robot 10R and the painting robot 10L are positioned symmetrically with respect to the transport center plane PI, respectively. That is, the distances from the first axes A1 (illustrated in FIG. 1) of the painting robot 10R and the painting robot 10L to the transport center plane P1 are equal to each other. Further, the respective "arm configurations" of the painting robot 10R and the painting robot 10L are symmetrical with respect to the transport center plane P1. Here, "arm configuration" refers to the arrangement of the axes around which the respective arms pivot or rotate. The arrangement of the axes includes angles formed by axes adjacent to each other, and distances between axes adjacent to each other.

That is, when the "arm configurations" are symmetrical, differences in the profile and shape of the arm do not matter. In other words, even when the profiles and shapes of the arms differ, the arm configurations are symmetrical as long as the arrangements of the axes are symmetrical. Similarly, even when the profiles and shapes of the arms differ, the arm configurations are the same as long as the arrangements of the axes are the same.

Thus, by using robots with symmetrical arm configurations, teaching data can be inverted for use, thereby reducing the cost of generating the teaching data and reducing the manufacturing cost of the robots.

FIG. 4 illustrates the workpiece 500 with side doors 510 and a rear tailgate 520 open. The painting robots 10 perform painting work on the inside of the doors 510 and on the inside of the vehicle while avoiding interference with the workpiece 500. By arranging the painting robots 10 with symmetrical axis configurations at equal distances from the transport center plane PI across the workpiece 500 as described above, the teaching data can be reused, thereby making the teaching work more efficient.

Here, as illustrated in FIG. 4, each of the pair of painting robots 10 (the painting robot 10R and the painting robot 10L) is disposed so that the first upper arm 13 is disposed on the upstream side (the X-axis negative direction side) relative to the lower arm 12 in the transport direction. By disposing each of the painting robots 10 in this manner, for example, it is easier to avoid interference between the first upper arm 13 and the door 510, and painting work can be performed rapidly.

FIG. 5 corresponds to a side view of the painting system 1 illustrated in FIG. 4, as viewed from the upstream side in the transport direction of the workpiece 500. As illustrated in FIG. 5, each of the painting robots 10 can perform painting work on the workpiece 500 with the upper arm UA in a folded state. In addition, interference with the workpiece 500 to be transported can be avoided by extending the upper arm UA while it swings up, for example.

Note that in FIG. 5, the first axes A1 (see FIG. 1) of the pair of painting robots 10 are disposed in orientations along the vertical direction (Z-axis), but the painting robots 10 may be disposed in orientations in which the first axes A1 are inclined relative to the vertical axis (Z-axis). Specifically, the pair of painting robots 10 may be disposed in such orientations that the first axes A1 intersect at the transport center plane PI above the bases 10b (see FIG. 1). In this manner, by disposing each of the painting robots 10 at an angle so as to lean forward relative to the workpiece 500, flexible painting work suited to workpieces 500 having various shapes can be performed while avoiding interference with the workpieces 500.

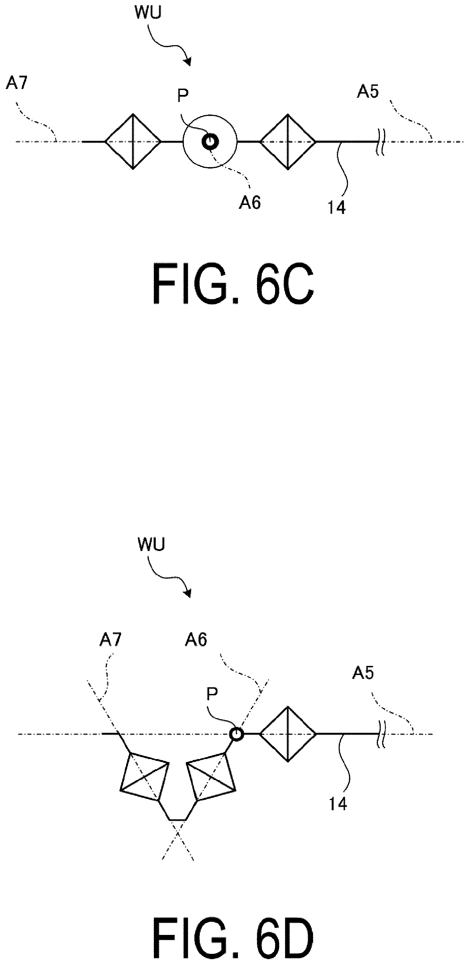

Next, variations of the wrist unit WU illustrated in FIG. 1 will be described with reference to FIGS. 6A to 6D. FIG. 6A is a model diagram illustrating an axis configuration of a two-roll hollow wrist, and FIG. 6B is a model diagram illustrating an axis configuration of a lemma wrist. FIG. 6C is a model diagram illustrating an axis configuration of an inline wrist, and FIG. 6D is a model diagram illustrating an axis configuration of a three-roll hollow wrist.

Here, FIG. 6A corresponds to the wrist unit WU illustrated in FIG. 1, and FIGS. 6B, 6C, and 6D correspond to variations of the wrist unit WU illustrated in FIG. 1. Although the wrist units WU illustrated in FIGS. 6A to 6D have different axis configurations from each other, they all have a common feature of having a three-axis configuration.

Further, in FIGS. 6A to 6D, each of the joint portions of the wrist units WU is expressed as symbols. Specifically, a rectangular symbol represents a "rotation joint", and a circular symbol represents a "pivoting joint". Here, a diagonal line (straight line) of the rectangular symbol corresponds to a rotation plane of the joint, and indicates that the joint rotates about another diagonal line (long dashed short dashed line), which is the rotation axis.

A dot on a circle symbol indicates an axis of rotation, and the joint rotates about this axis of rotation. Note that in FIGS. 6A to 6D, the second upper arm 14 illustrated in FIG. 1 is expressed as symbols and a straight line, and the straight line indicates the extension direction of the second upper arm 14. However, each of FIGS. 6A to 6D merely illustrates the axis configuration and does not distinguish between hollow structures and solid structures. Note that, in general, painting robots adopt a hollow structure that allows for the routing of hoses, tubes, cables, and the like inside the wrist unit WU in any variation.

The wrist unit WU illustrated in FIG. 6A is a so-called "two-roll hollow wrist", as described above with reference to FIG. 1. As illustrated in FIG. 6A, the wrist unit WU rotates about the fifth axis A5 that overlaps the second upper arm 14 expressed as symbols, and also rotates about the sixth axis A6 that tilts and intersects the fifth axis A5. Further, the wrist unit WU rotates about the seventh axis A7. Note that the P-point P described above with reference to FIG. 1 is the intersection between the fifth axis A5 and the sixth axis A6.

The wrist unit WU illustrated in FIG. 6B is a so-called "lemma wrist". As illustrated in FIG. 6B, the wrist unit WU pivots about the fifth axis A5 perpendicular to the extension direction of the second upper arm 14 and rotates about the sixth axis A6 orthogonal to the fifth axis A5. In addition, the wrist unit WU rotates about the seventh axis A7 orthogonal to the sixth axis A6. Note that the P-point P is the intersection between the fifth axis A5 and the second upper arm 14 expressed as symbols.

The wrist unit WU illustrated in FIG. 6C is a so-called "inline wrist". As illustrated in FIG. 6C, the wrist unit WU rotates about the fifth axis A5 that overlaps the second upper arm 14 expressed as symbols, and pivots about the sixth axis A6 orthogonal to the fifth axis A5. In addition, the wrist unit WU rotates about the seventh axis A7 orthogonal to the sixth axis A6. Note that the P-point P is the intersection between the fifth axis A5 and the sixth axis A6.

The wrist unit WU illustrated in FIG. 6D is a so-called "three-roll hollow wrist". As illustrated in FIG. 6D, the wrist unit WU rotates about the fifth axis A5 that overlaps the second upper arm 14 expressed as symbols, and rotates about the sixth axis A6 that tilts and intersects the fifth axis A5. Further, the wrist unit WU rotates about the seventh axis A7 that tilts and intersects the fifth axis A5 and the sixth axis A6. That is, the extension lines of the fifth axis A5, the sixth axis A6, and the seventh axis A7 form a triangular shape. Note that the P-point P is the intersection between the fifth axis A5 and the sixth axis A6.

Thus, instead of the wrist unit WU illustrated in FIG. 1, the wrist unit WU illustrated in FIGS. 6B, 6C, or 6D may be used. Provided that the wrist unit WU has a three-axis configuration, a mechanism other than the axis configurations illustrated in FIGS. 6A to 6D may also be used as the wrist unit WU.

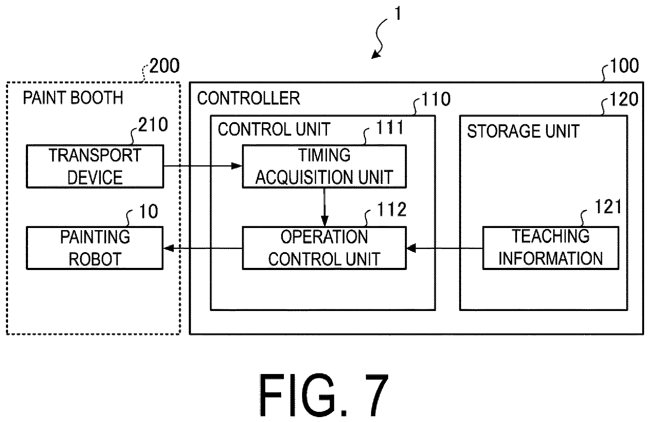

Next, a configuration of the painting system 1 will be described with reference to FIG. 7. FIG. 7 is a block diagram illustrating the configuration of the painting system 1. As illustrated in FIG. 7, the painting system 1 includes the transport device 210 and the painting robot 10 in the paint booth 200. Further, the painting system 1 includes a controller 100. Note that the transport device 210 and the painting robot 10 are connected to the controller 100.

First, the painting robot 10 has been described above with reference to FIG. 1 and others, and thus further description will be omitted here. As already described with reference to FIG. 4 and the like, the transport device 210 is a device such as a conveyor belt that transports the workpiece 500 (see FIG. 4) in a predetermined transport direction. Note that the transport device 210 includes a detection device (not illustrated) such as a sensor that detects the position of the workpiece 500 and notifies the controller 100 of a timing at which the workpiece 500 has passed or the like. Further, the transport device 210 transports the workpiece 500 at a constant speed.

The controller 100 includes a control unit 110 and a storage unit 120. The control unit 110 includes a timing acquisition unit 111 and an operation control unit 112. The storage unit 120 stores teaching information 121. Note that, although one controller 100 is illustrated in FIG. 7 for ease of explanation, the transport device 210 and the individual painting robots 10 may be connected to separate controllers 100. Thus, when a plurality of controllers 100 are used, a higher level controller 100 that manages the plurality of controllers 100 may be provided.

Here, the controller 100 includes a computer including, for example, a central processing unit (CPU), a read only memory (ROM), a random access memory (RAM), a hard disk drive (HDD), and input/output ports, and various circuits.

The CPU of the computer functions as the timing acquisition unit 111 and the operation control unit 112 of the control unit 110 by, for example, reading and executing a program stored in the ROM.

Further, at least one or both of the timing acquisition unit 111 and the operation control unit 112 may be constituted of hardware such as an application specific integrated circuit (ASIC) or a field programmable gate array (FPGA).

The storage unit 120 corresponds to, for example, a RAM or an HDD. The RAM or the HDD can store the teaching information 121. Note that the controller 100 may acquire the above-described program and various kinds of information via another computer or a portable recording medium connected to a wired or wireless network. Further, the controller 100 may be configured as a plurality of devices capable of communicating with one another, or may be configured as a hierarchical device capable of communicating with a higher level or a lower level device.

The control unit 110 controls the operation of each painting robot 10 while acquiring, from the transport device 210, position information (pulse signals) of a jig such as a base that fixes the workpiece 500 (see FIG. 4) to the movable portion of the transport device 210, or interlock signals for causing each device to operate exclusively. Note that, when a plurality of the controllers 100 is provided, the control unit 110 also executes synchronization processing between the controllers 100.

The timing acquisition unit 111 acquires the position information and the interlock signals described above from the transport device 210. Then, the timing acquisition unit 111 determines the operation timing of each robot in accordance with the acquired position information and interlock signals, and notifies the operation control unit 112 of the determined operation timing. For example, the timing acquisition unit 111 acquires a timing at which the workpiece 500 (see FIG. 4) reaches a predetermined position in the paint booth 200, and instructs the operation control unit 112 to operate each painting robot 10 based on the acquired timing.

The operation control unit 112 operates each painting robot 10 based on the instruction from the timing acquisition unit 111 and the teaching information 121. The operation control unit 112 enhances the motion accuracy of each painting robot 10 by, for example, executing feedback control while using an encoder value in an actuator (not illustrated) being the power source of each painting robot 10.

The teaching information 121 is information that is created at a teaching stage of teaching motions to each painting robot 10, and includes a "job" that defines a motion path of each painting robot 10. Note that, in the painting system 1, robots with symmetrical arm configurations are used as described above, and the respective painting robots 10 are disposed at symmetrical positions across the transport device 210 (see FIG. 4). Thus, based on the teaching data of one painting robot 10, it is easy to generate the teaching data of the other painting robot 10.

For example, the teaching data of the painting robot 10R that works on the right side of the workpiece 500 in FIG. 4 can be converted to the teaching data of the painting robot 10L that works on the left side of the workpiece 500 by partial modification or coordinate conversion of the teaching positions included in the teaching data. Thus, according to the painting system 1, the labor and cost of generating the teaching information 121 including the teaching data can be reduced.

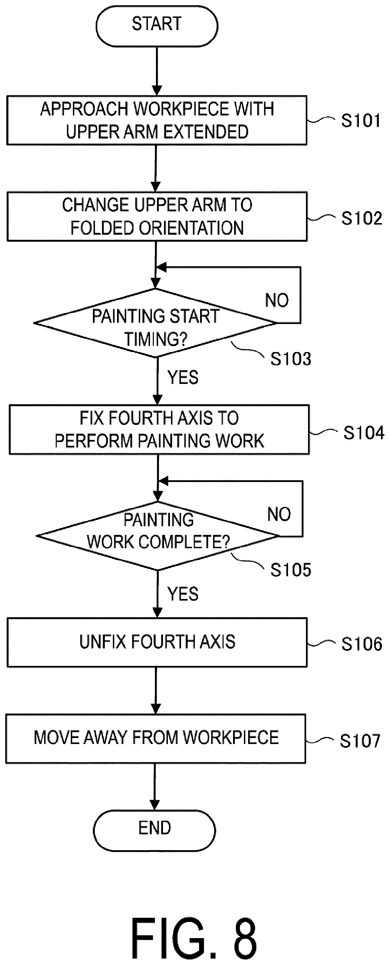

Next, the operation procedure of the painting robot 10 in the painting system 1 will be described with reference to FIG. 8. FIG. 8 is a flowchart showing the operation procedure of the painting robot 10. As shown in FIG. 8, when the workpiece 500 (see FIG. 4) approaches from the upstream side, the painting robot 10 (see FIG. 1) approaches the workpiece 500 with the upper arm UA extended (step S101). Here, "approach" refers to directing the upper arm UA toward the workpiece 500 without interference with the workpiece 500.

Subsequently, when the workpiece 500 approaches further, the painting robot 10 changes orientation to an orientation in which the upper arm UA is folded (step S102). Here, the orientation in which the upper arm UA is folded refers to an orientation in which the second upper arm 14 is bent relative to the first upper arm 13 so as not to interfere with the door 510 of the workpiece 500. For example, the wrist unit WU can be positioned inside the door 510 by pivoting the second upper arm 14 downward in a state in which the tip end of the first upper arm 13 is above the door 510.

Then, the painting system 1 determines whether it is a painting start timing (step S103). In a case where the painting system 1 determines that it is the painting start timing (step S103: Yes), pivot about the fourth axis A4 is fixed and the painting work is performed (step S104).

By fixing the fourth axis A4 with the upper arm UA folded, it is possible to avoid accidental interference with the workpiece 500 while increasing accessibility to the workpiece 500. Note that in a case where the painting system 1 determines in step S103 that it is not the painting start timing (step S103: No), the processing of step S103 is repeated.

Subsequently, the painting system 1 determines whether the painting work is complete (step S105). In a case where the painting system 1 determines that the painting work is complete (step S105: Yes), the fourth axis A4 is unfixed (step S106), the painting robot 10 is moved away from the workpiece 500 (step S107) and the processing is terminated. Note that in a case where the painting system 1 determines in step S105 that the processing is not complete (step S105: No), the processing of step S105 is repeated.

Note that while FIG. 8 shows a case in which the fourth axis A4 is always fixed during the painting work, the fourth axis A4 may be intentionally operated during the painting work. For example, assume that the upper arm UA is in the folded position and the fourth axis A4 is fixed to start the painting work, and it is difficult to access a distant object in the same orientation during the painting work. In this case, the fourth axis A4 may be unfixed and the fourth axis A4 may be operated in a direction in which the upper arm UA is extended. In addition, when it is difficult to access an object close by, the fourth axis A4 may be operated in a direction in which the upper arm UA is further folded. That is, even during the painting work, the painting robot 10 may be operated as a seven-axis robot with a redundant axis.

As described above, the painting robot 10 according to the aspect of the embodiment includes the base 10b, the swivel base 11, the lower arm 12, the upper arm UA, and the wrist unit WU. The base 10b is fixed to the installation surface IS. The swivel base 11 is supported, on the base end side, on the upper surface side of the base 10b, and swivels about the first axis A1 along the vertical direction. The lower arm 12 is supported, on the base end side, by the swivel base 11, and pivots about the second axis A2 perpendicular to the first axis A1. The upper arm UA is supported, on the base end side, by the tip end side of the lower arm 12, and pivots about the third axis A3 parallel to the second axis A2.

The wrist unit WU has a three-axis configuration in which the base end side is supported by the tip end side of the upper arm UA and the end effector EE can be attached to the tip end side. The upper arm UA includes the first upper arm 13 on the base end side and the second upper arm 14 on the tip end side. The second upper arm 14 is supported, on the base end side, by the tip end side of the first upper arm 13, and pivots about the fourth axis A4 parallel to the third axis A3 and has an arm length longer than the arm length of the first upper arm 13 and shorter than twice the arm length of the first upper arm 13.

Thus, in the painting robot 10, the upper arm UA has the two-arm configuration, and the upper arm UA is provided with the fourth axis A4, which is the redundant axis, whereby the upper arm UA can be bent and extended. The arm length of the second upper arm 14 is longer than the arm length of the first upper arm 13 and shorter than twice the arm length of the first upper arm 13. Thus, according to the painting robot 10, the effective range of motion can be extended and accessibility to the workpiece 500 can be improved.

The painting system 1 according to the aspect of the embodiment includes the paint booth 200 and the painting robot 10. At least a pair of the painting robots 10 is disposed in the paint booth 200 so as to sandwich the workpiece 500 in the transport direction of the workpiece 500. In the pair of painting robots 10, the axis configurations are symmetrical with respect to the transport center plane PI along the transport direction, and the distances between the first axes A1 and the transport center plane P1 are equal to each other.

By arranging the painting robots 10 with symmetrical axis configurations at equal distances from the transport center plane PI across the workpiece 500 as described above, the teaching data can be reused, thereby making the teaching work more efficient. The painting robot 10 can be disposed close to the workpiece 500, so that it is possible to contribute to downsizing of the paint booth.

Note that, in the embodiment described above, a case in which the painting robot 10 is the seven-axis robot having one redundant axis is exemplified, but a robot having eight or more axes with a plurality of redundant axes may be used.

Additional effects and modifications can be easily derived by a person skilled in the art. Thus, the broader aspects of the present invention are not limited to the specific details and representative examples illustrated and described above. Accordingly, various modifications may be made without departing from the spirit or scope of the general inventive concept as defined by the appended claims and their equivalents.

### Reference Signs List

1 Painting system
10 Painting robot
10b Base
10c Auxiliary member
11 Swivel base
12 Lower arm
13 First upper arm
14 Second upper arm
15 Fifth arm
16 Sixth arm
17 Seventh arm
18 Linear body
19 Support section
19a Attachment portion
19b Holder portion
100 Controller
110 Control unit
111 Timing acquisition unit
112 Operation control unit
120 Storage unit
121 Teaching information
200 Paint booth
201 Floor
202 Wall
203 Ceiling
210 Transport device
500 Workpiece
510 Door
520 Tailgate
A1 First axis
A2 Second axis
A3 Third axis
A4 Fourth axis
A5 Fifth axis
A6 Sixth axis
A7 Seventh axis
AS Swing axis
EE End effector
IS Installation surface
P P-point
SH Through-hole
UA Upper arm
WU Wrist unit
PI Transport center plane

## Claims

1. A painting robot (10) comprising:
a base (10b) fixed on an installation surface (IS);
a swivel base (11) supported, on a base end side, on an upper surface side of the base (10b) and configured to swivel about a first axis (A1) along a vertical direction;
a lower arm (12) supported, on a base end side, by the swivel base (11) and configured to pivot about a second axis (A2) perpendicular to the first axis (A1);
an upper arm (UA) supported, on a base end side, by a tip end side of the lower arm (12) and configured to pivot about a third axis (A3) parallel to the second axis (A2); and
a wrist unit (WU) having a three-axis configuration in which a base end side is supported by a tip end side of the upper arm (UA) and a tip end side is configured to receive attachment of an end effector (EE), wherein
the upper arm (UA) includes
a first upper arm (13) on a base end side, and
a second upper arm (14) on a tip end side, and
the second upper arm (14) is supported, on a base end side, by a tip end side of the first upper arm (13), pivots about a fourth axis (A4) parallel to the third axis (A3), and has an arm length longer than an arm length of the first upper arm (13) and shorter than twice the arm length of the first upper arm (13).

2. The painting robot (10) according to claim 1, further comprising:
a support section (19) configured to swivel while supporting a linear body (18) routed outside the painting robot (10), wherein
the second upper arm (14) is supported by the first upper arm (13) on a side on which the first upper arm (13) is supported by the lower arm (12), and
the support section (19) supports the linear body (18) routed across a front side of the first upper arm (13) toward the second upper arm (14), on the front side of the first upper arm (13).

3. The painting robot (10) according to claim 2, wherein
the support section (19) supports the linear body (18) routed across a rear side of the lower arm (12) toward the first upper arm (13), on the rear side of the lower arm (12).

4. The painting robot (10) according to claim 1, 2, or 3, wherein the wrist unit (WU) is a two-roll hollow wrist for painting.

5. A painting system (1) comprising:
a paint booth (200); and
the painting robot (10) according to any one of claims 1 to 4, wherein
at least a pair of the painting robots (10) is disposed in the paint booth (200) to sandwich a workpiece (500) in a transport direction of the workpiece, and
in the pair of painting robots (10), axis configurations are symmetrical with respect to a transport center plane (PI) along the transport direction, and distances between the first axes (A1) and the transport center plane (PI) are equal to each other.

6. The painting system (1) according to claim 5, wherein
the first upper arm (13) of each of the pair of painting robots (10) is disposed on an upstream side relative to the lower arm (12) in the transport direction.

7. The painting system (1) according to claim 5 or 6, wherein
the first axes (A1) of the pair of painting robots (10) are disposed in an orientation intersecting each other at the transport center plane (P1) above the base (10b).

8. The painting system (1) according to claim 5, 6, or 7, wherein
during painting work on the workpiece (500), each of the pair of painting robots (10) fixes pivoting about the fourth axis (A4) in an orientation in which the second upper arm (14) is folded relative to the first upper arm (13).
